# EUROPÄISCHE PATENTSCHRIFT

(11) **EP 1 313 110 B1**
(45) Veröffentlichungstag und Bekanntmachung des Hinweises auf die Patenterteilung: **15.12.2010**
(21) Anmeldenummer: 02021921.8
(22) Anmeldetag: 28.09.2002
(51) Int. Cl.: F01L 1/344

(54) **Elektromagnet, insbesondere Proportionalmagnet zur Betätigung eines hydraulischen Ventils**
Electro magnet, especially a proportional magnet commanding an hydraulic valve
Electro-aimant, particulièrement un électro-aimant proportionnel pour la commande d'une valve hydraulique

(30) Priorität: 26.10.2001 DE 10153019
(43) Veröffentlichungstag der Anmeldung: 21.05.2003
(73) Patentinhaber: Schaeffler Technologies GmbH & Co. KG, 91074 Herzogenaurach (DE)
(72) Erfinder: Schäfer, Jens, 91074 Herzogenaurach (DE)

(56) Entgegenhaltungen:
- EP-A2- 0 935 262
- DE-A1- 4 343 879
- DE-A1- 19 504 185
- DE-A1- 19 716 517
- DE-A1- 19 924 837

## Beschreibung

### Gebiet der Erfindung

Die Erfindung betrifft einen Elektromagneten nach den oberbegriffsbildenden Merkmalen des Anspruchs 1, und sie ist insbesondere vorteilhaft an einem innerhalb eines Hydrauliksystems einer Vorrichtung zum Verändern der Steuerzeiten von Gaswechselventilen einer Brennkraftmaschine angeordneten Proportionalmagneten zur Betätigung eines hydraulischen Ventils realisierbar.

### Hintergrund der Erfindung

Aus der DE 195 04 185 A1 ist ein gattungsbildender Elektromagnet zur Betätigung eines hydraulischen Ventils bekannt, der einen zumindest einer Spulenwicklung tragenden und am Außenumfang von einem Magnetgehäuse umschlossenen Spulenkörper aufweist. Dieser Spulenkörper wird stirnseitig von einem durch eine ringförmige Polscheibe mit eingesetztem Polrohr gebildeten oberen Polschuh, auf dem ein elektrischer Anschlußkörper aufliegt, sowie von einem durch eine Polplatte mit angeformten Polkern gebildeten unteren Polschuh, der in den Hohlzylinder des Spulenkörpers hineinragt, begrenzt. Der Hohlzylinder des Spulenkörpers ist dabei mit einem nicht magnetisierbaren Metallrohr ausgekleidet, dessen Hohlraum als Ankerraum für einen axial beweglichen, zylindrischen Magnetanker ausgebildet ist. Dieser Magnetanker teilt den Ankerraum wiederum in eine erste Kammer und eine zweite Kammer, die zum Druckausgleich von über das hydraulischen Ventil in den Ankerraum eindringenden Arbeitsfluid über mehrere exzentrische Axialbohrungen im Magnetanker miteinander verbunden sind. Darüber hinaus ist in einer zentrischen Grundbohrung in der ventilseitigen Stirnseite des Magnetankers eine Stößelstange befestigt, die durch eine ebenfalls zentrische Axialbohrung im unteren Polschuh hindurch geführt ist und mit einem im Innenraum eines Ventilgehäuses eines hydraulischen Ventils angeordneten Steuerkolben in Verbindung steht. Das Ventilgehäuse des hydraulischen Ventils liegt dabei dichtend am unteren Polschuh des Elektromagneten an, wobei der den Steuerkolben führende Innenraum des Ventilgehäuses über eine weitere, neben der zentrischen Axialbohrung angeordnete exzentrische Bohrung im unteren Polschuh zum Druckausgleich mit der ersten Kammer des Ankerraumes verbunden ist.

Nachteilig an diesem bekannten Elektromagneten ist es jedoch, dass dessen Einzelteile durch ihre konstruktive Ausbildung und durch ihre Anordnung zueinander eine präzise und aufwendige Fertigung sowie einen hohen Montageaufwand erfordern, so dass bei der Herstellung eines solchen Elektromagneten insgesamt mit einem hohen Kostenaufwand zu rechnen ist. So hat es sich beispielsweise als fertigungstechnisch sehr aufwendig erwiesen, den Magnetanker und die Stößelstange als fest miteinander verbundene Baugruppe auszubilden und gleichzeitig die Stößelstange durch die zentrische Axialbohrung im unteren Polschuh zu führen, da somit zur Vermeidung vom Achsversätzen zwischen der Längsachse des Magnetankers und der Längsachse der Stößelstange sowie zwischen dieser und der Längsachse der zentrischen Axialbohrung im unteren Polschuh aufwendige Kalibrierarbeiten an allen Teile notwendig sind. Derartige Achsversätze hätten zur Folge, dass die radiale Luftspalte zwischen dem Magnetanker und der Ankerführung und/oder zwischen der Stößelstange und der Axialbohrung nicht gleich groß sind und der Magnetanker oder die Stößelstange sich somit bei Bestromung des Elektromagneten an einer Stelle an die Ankerführung oder an die Axialbohrung anlegen, so dass auf den Magnetanker eine seiner Bewegungsrichtung entgegenwirkende Reibkraft wirkt, die zu einer unzulässig hohen Hysterese führen kann. Darüber hinaus haben sich jedoch auch die im Magnetanker und unteren Polschuh angeordneten, exzentrischen Druckausgleichskanäle als sehr aufwendig erwiesen, da diese üblicherweise gebohrt werden müssen und eine exzentrische Einbringung diese Bohrungen den Fertigungsaufwand signifikant erhöht.

Aus der DE 43 43 879 A1 ist ein weiterer Elektromagnet bekannt, der eine Stößelstange aufweist, die eine Axialbohrung des unteren Polschuhs durchgreift. Dabei ist die Außenkontur der Stößelstange der Innenmantelfläche der Axialbohrung angepasst. Somit kann kein Druckausgleich zwischen der ersten Kammer und dem Ventilgehäuse erfolgen kann.

Aus der DE 197 16 517 A1 ist ein weiterer Elektromagnet bekannt, der eine Stößelstange und einen Anker aufweist. Ein Ende der Stößelstange durchgreift eine Axialbohrung des unteren Polschuhs, wobei an deren Außenmantelfläche im Bereich des Polschuhs Profilierungen vorgesehen sind. Das andere Ende der Stößelstange greift in eine Bohrung des Ankers ein und ist fest mit diesem verbunden. Die Lagerung der Einheit Stößelstange - Anker erfolgt über eine Bauchlagerstelle des Ankers und eine Gleitlagerung zwischen der Stößelstange und dem unteren Polschuh. Somit führt selbst ein kleiner radialer Versatz zwischen der Achse des Ankers und der Achse der Stößelstange zu einer hohen Reibung.

### Aufgabe der Erfindung

Der Erfindung liegt deshalb die Aufgabe zugrunde, eine Elektromagnet, insbesondere Proportionalmagnet zur Betätigung eines hydraulischen Ventils, zu konzipieren, der sich durch eine einfache konstruktive Ausbildung seiner Einzelteile und deren Anordnung zueinander sowie durch einen geringen Fertigungs- und Montageaufwand und damit durch eine kostenoptimierte Herstellbarkeit auszeichnet und gleichzeitig eine optimale Führung des Magnetankers und der Stößelstange sowie ausreichende Möglichkeiten zum Druckausgleich zwischen der ersten und der zweiten Kammer des Ankerraumes sowie zwischen der ersten Kammer und dem Innenraum eines Ventilgehäuses aufweist.

### Zusammenfassung der Erfindung

Erfindungsgemäß wird diese Aufgabe bei einem Elektromagnet nach dem Oberbegriff des Anspruchs 1 derart gelöst, dass die in der Axialbohrung im unteren Polschuh geführte Stößelstange als vom Magnetanker getrennte, lose Profilstange ausgebildet ist, deren Querschnittsform von der Querschnittsform der Axialbohrung abweicht und deren Querschnittsfläche kleiner als die Querschnittsfläche der Axialbohrung ist, so dass die freien Querschnittsräume innerhalb der Axialbohrung im unteren Polschuh zugleich als den weiteren Druckausgleichskanal bildenden Druckausgleichskanäle zwischen dem Innenraum des Ventilgehäuses des hydraulischen Ventils und der ersten Kammer im Ankerraum des Elektromagneten nutzbar sind, wobei der stirnseitig an der Stößelstange anliegende Magnetanker eine zentrische Längsbohrung aufweist, deren Durchmesser kleiner als die größte Profilweite der Stößelstange und zugleich größer als die kleinste Profilweite der Stößelstange ausgebildet ist, so dass die Stirnseite der Stößelstange die Öffnung der Längsbohrung im Magnetanker nur teilweise überdeckt und die Längsbohrung somit über die freien Querschnittsflächen ihrer Öffnung als Druckausgleichskanal zwischen der ersten Kammer und der zweiten Kammer im Ankerraum des Elektromagneten nutzbar ist.

Die Trennung der Stößelstange vom Magnetanker des Elektromagneten hat dabei den Vorteil, dass es zu keinerlei Achsversätzen mehr zwischen der Längsachse des Magnetankers und der Längsachse der Stößelstange sowie zwischen dieser und der Längsachse der Axialbohrung im unteren Polschuh kommen kann und das sowohl der Magnetanker als auch die Stößelstange somit optimal getrennt voneinander geführt werden können. Die Axialbohrung im unteren Polschuh ist dabei bevorzugt als zentrische Durchgangsbohrung mit einem kreisförmigen Profilquerschnitt ausgebildet, deren Durchmesser etwa der größten Profilweite der Stößelstange entspricht. Dadurch ist es möglich, die Stößelstange exakt in der Axialbohrung im unteren Polschuh zu führen und gleichzeitig die bisher üblichen, durch aufwendige exzentrische Bohrungen im unteren Polschuh gebildeten, gesonderten Druckausgleichskanäle einzusparen, da diese nunmehr durch die neben der profilierten Stößelstange entstehenden freien Querschnittsräume in der Axialbohrung gebildet werden.

Eine derartige Ausbildung ist nur durch die Trennung von Magnetanker und Stößelstange sowie durch die profilierte Ausbildung der Stößelstange möglich und hat den Vorteil, dass mit einer einzigen, relativ einfach und gegebenenfalls sogar spanlos herstellbaren zentrischen Durchgangsbohrung im Magnetanker ein Druckausgleichskanal zwischen den Kammern im Ankerraum des Elektromagneten gebildet wird, durch den die bisher üblichen, ebenfalls durch aufwendige exzentrische Bohrungen oder durch Axialnuten im Magnetanker gebildeten, gesonderten Druckausgleichskanäle eingespart werden können. Die über die Öffnung der Längsbohrung im Magnetanker überstehenden und an der Stirnseite des Magnetankers anliegenden Profilabschnitte der profilierten Stößelstange gewährleisten dabei, dass trotz der zentrisch im unteren Polschuh geführten Stößelstange und der ebenfalls zentrischen Magnetanker angeordneten Längsbohrung eine zur Übertragung der elektromagnetisch erzeugten Axialbewegungen des Magentankers auf die Stößelstange ausreichende Kontaktfläche zwischen dem Magnetanker und der Stößelstange vorhanden ist. Der dazu notwendige ständige Kontakt zwischen dem Magnetanker und der Stößelstange wird dabei kraftschlüssig durch ein mit dem Steuerkolben des hydraulischen Ventils in Wirkverbindung stehendes Federelement sichergestellt, welches die Stößelstange über diesen Steuerkolben gegen die Stirnseite des Magnetankers drückt und das Kräftegleichgewicht zum bestromten Elektromagneten herstellt.

In zweckmäßiger Ausgestaltung des erfindungsgemäß ausgebildeten Elektromagneten wird es darüber hinaus vorgeschlagen, die Stößelstange bevorzugt als an den Profilkanten abgerundetes Mehrkantprofil oder als ein- oder mehrseitig abgeflachtes Rundprofil aus einer Messinglegierung auszubilden. Derartige Profile sind spanlos durch Strangpressen herstellbar, die durch ebenfalls spanloses Stanzschneiden auf die passende Länge zugeschnitten werden können und somit ebenfalls zur kostenoptimierten Herstellung des Elektromagneten beitragen. Besonders geeignete Profile sind dabei Drei- oder Vierkantprofile, die zur Verbesserung ihrer Führung an ihren Profilkanten mit dem Radius der Axialbohrung im unteren Polschuh abgerundet sind, oder Rundprofile, die einen geringfügig kleineren Durchmesser als die Axialbohrung im unteren Polschuh aufweisen und mit einer oder mehren axialen Abflachungen an ihrer Mantelfläche ausgebildet sind. Denkbar sind hierbei jedoch auch andere geeignete Profile, beispielsweise ovale Profile oder auch runde Profile, die in einer ovalen Axialbohrung im unteren Polschuh geführt werden, und/oder auch die Verwendung eines anderen geeigneten Werkstoffes für die Stößelstange.

Des weiteren wird es, insbesondere im Hinblick auf die Verwendung des erfindungsgemäß ausgebildeten Elektromagneten als Betätigungselement eines für die Steuerung einer Vorrichtung zur Nockenwellenverstellung vorgesehen Hydraulikventils noch vorgeschlagen, sowohl die Querschnittsflächen der Druckausgleichskanäle im unteren Polschuh als auch die von der Stirnseite der Stößeistange nicht überdeckten Querschnittsflächen der Längsbohrung im Magnetanker jeweils mit einem Gesamtströmungsquerschnitt von mindestens 0,5 mm² auszubilden, wenn, wie größtenteils üblich, innerhalb des Hydrauliksystems mit einem statischen Betriebsdruck von bis zu 10 bar gearbeitet wird. Dieser Gesamtströmungsquerschnitt ist bei der Auswahl der Profilform und der Profilgröße für die Stößelstange zu beachten und stellt einen unteren Grenzwert dar, bei dem ein Dämpfungseffekt am Magnetanker bzw. eine Erhöhung der Hysterese durch zu kleine Querschnitte in den Druckausgleichskanälen auch bei niedrigen Druckmitteltemperaturen und hoher Druckmittelviskosität ausgeschlossen werden kann.

Schließlich wird es als weitere Maßnahme zur kostenoptimierten Herstellung des erfindungsgemäß ausgebildeten Elektromagneten noch vorgeschlagen, dass nicht magnetisierbare Metallrohr im Hohlzylinder des Spulenkörpers bevorzugt als einseitig geschlossenes, becherförmiges Kupferrohr auszubilden, welches die Spulenwicklung gegen das Arbeitsfluid des hydraulischen Ventils abdichtet und dessen Innenseite zugleich als Führung für den Magnetanker ausgebildet ist. Ein solches einseitig geschlossenes Kupferrohr ist kostengünstig als spanloses Tiefziehteil herstellbar und ermöglicht es, eine üblicherweise bei solchen Elektromagneten zusätzlich in den Ankerraum eingesetzte Druckrohrhülse aus einem zumeist hochlegierten, nicht rostenden Stahl einzusparen. Möglich ist es jedoch auch, anstelle des becherförmigen Kupferrohres ein gleichartig ausgebildetes Rohr aus einem anderen geeigneten Material einzusetzen. Darüber hinaus hat es sich als vorteilhaft erwiesen, den Magnetanker und/oder die Innenseite des nicht magnetisierbaren Metallrohrs zur Verringerung der Hysterese des Magnetankers sowie zur Erhöhung der Lebensdauer des Elektromagneten mit einer reibungsarmen bzw. verschleißmindernden Beschichtung zu versehen, die abhängig von den Werkstoffen für das Metallrohr und für den Magnetanker beispielsweise als PTFE-Beschichtung oder als Zinn-, Silber-, Kupfer-, Nickel- oder Eloxalschicht ausgebildet sein kann. Zusätzlich oder auch alternativ zu einer solchen Beschichtung ist es noch von Vorteil, den Magnetanker nicht mit seiner gesamten Mantelfläche an der Innenseite des nicht magnetisierbaren Metallrohres zu führen, um den Reibungskoeffizienten und die Hysterese des Magnetankers noch weiter zu senken. Zur Definition seiner Lagerstellen an der Innenseite des nicht magnetisierbaren Metallrohres ist der Magnetanker deshalb an seinem oberen und unteren Ende bevorzugt durch Centerlessschleifen bearbeitet, wobei der Durchmesser des Magnetankers zwischen den Lagerstellen in an sich bekannter Weise minimal reduziert ist.

Der erfindungsgemäß ausgebildete Elektromagnet, insbesondere Proportionalmagnet zur Betätigung eines hydraulischen Ventils, weist somit gegenüber den aus dem Stand der Technik bekannten Elektromagneten den Vorteil auf, dass er aus konstruktiv einfach ausgebildeten und zueinander angeordneten Einzelteilen besteht, deren Fertigung und Montage einen geringen Aufwand erfordert und die somit den Kostenaufwand für die Herstellung des Elektromagneten erheblich senken. Vor allem die Trennung von Magnetanker und Stößelstange in jeweils gesondert geführte Einzelteile ermöglicht es dabei, die bisher unter erheblichen Aufwendungen zusätzlich in den Magnetanker und in den unteren Polschuh einzuarbeitenden, exzentrischen Druckausgleichskanäle sowie die aufwendigen Kalibrierungsarbeiten zur Vermeidung von Achsversätzen zwischen den Längsachsen des Magnetankers, der Stößelstange und der zentrischen Axialbohrung im unteren Polschuh gänzlich einzusparen.

### Kurze Beschreibung der Zeichnungen

Die Erfindung wird nachfolgend anhand eines Ausführungsbeispiels näher erläutert und ist in den zugehörigen Zeichnungen schematisch dargestellt. Dabei zeigen:
- Figur 1: einen Längsschnitt durch eine erste Ausführungsform eines erfin- dungsgemäß ausgebildeten Elektromagneten;
- Figur 2: einen Querschnitt A-A nach Figur 1 durch die erste Ausfüh- rungsform des erfindungsgemäß ausgebildeten Elektromagneten;
- Figur 3: einen Längsschnitt durch eine zweite Ausführungsform eines er- findungsgemäß ausgebildeten Elektromagneten;
- Figur 4: einen Querschnitt A-A nach Figur 3 durch die zweite Ausfüh- rungsform des erfindungsgemäß ausgebildeten Elektromagneten;
- Figur 5: einen Längsschnitt durch eine dritte Ausführungsform eines erfin- dungsgemäß ausgebildeten Elektromagneten;
- Figur 6: einen Querschnitt A-A nach Figur 5 durch die dritte Ausfüh- rungsform des erfindungsgemäß ausgebildeten Elektromagneten.

### Ausführliche Beschreibung der Zeichnungen

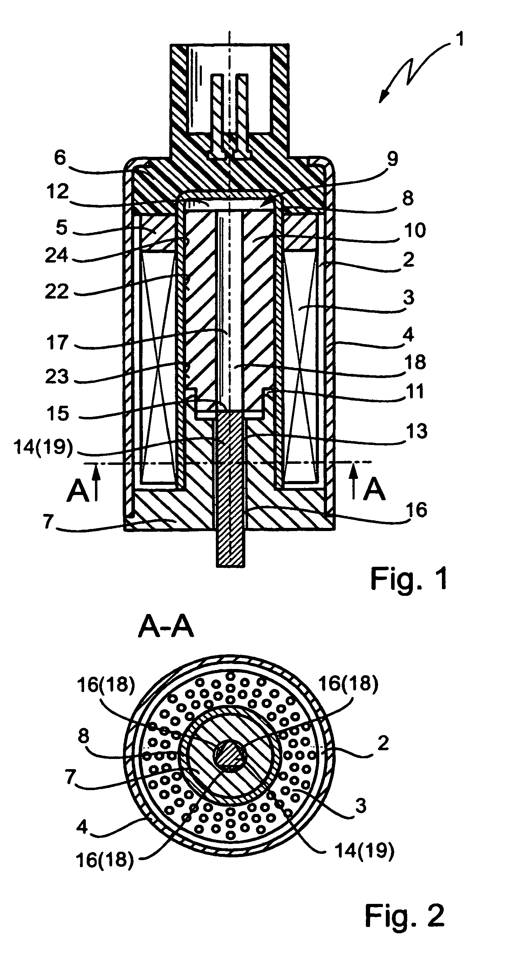

Aus den Figuren 1, 3 und 5 geht deutlich ein als Proportionalmagnet ausgebildeter Elektromagnet 1 hervor, der insbesondere zur Betätigung eines nicht dargestellten hydraulischen Ventils zur Steuerung einer Vorrichtung zum Verändern der Steuerzeiten von Gaswechselventilen einer Brennkraftmaschine geeignet ist. Deutlich sichtbar weist dieser Elektromagnet 1 einen hohlzylindrischen Spulenkörper 2 auf, der eine Spulenwicklung 3 trägt und am Außenumfang von einem Magnetgehäuse 4 umschlossen wird und welcher stirnseitig von einem oberen Polschuh 5, auf dem ein elektrisches Anschlußteil 6 aufliegt, sowie von einem unteren Polschuh 7, der in den Hohlzylinder des Spulenkörpers 2 hineinragt, begrenzt wird. Im Hohlzylinder des Spulenkörpers 2 ist darüber hinaus ein nicht magnetisierbares Metallrohr 8 angeordnet, dessen Hohlraum als Ankerraum 9 für einen axial beweglichen, zylindrischen Magnetanker 10 ausgebildet ist. Dieser Magentanker 10 teilt den Ankerraum 9 wiederum in eine erste Kammer 11 und eine zweite Kammer 12, die zum Druckausgleich von über das hydraulische Ventil in den Ankerraum 9 eindringenden Arbeitsfluid über einen im folgenden näher beschriebenen Druckausgleichskanal im Magnetanker 10 miteinander verbunden sind.

Ebenso ist in den Figuren 1, 3 und 5 zu sehen, dass der Magnetanker 10 über ein durch eine zentrische Axialbohrung 13 im unteren Polschuh 7 hindurch geführte Stößelstange 14 mit einem nicht dargestellten Steuerkolben des hydraulischen Ventils in Verbindung steht, wobei der Steuerkolben in einem dichtend am unteren Polschuh 7 des Elektromagneten 1 anliegenden, ebenfalls nicht dargestellten Ventilgehäuse geführt wird, dessen Innenraum über einen weiteren, gleichfalls im folgenden näher beschriebenen Druckausgleichskanal im unteren Polschuh 7 mit der ersten Kammer 11 des Ankerraumes 9 verbunden ist.

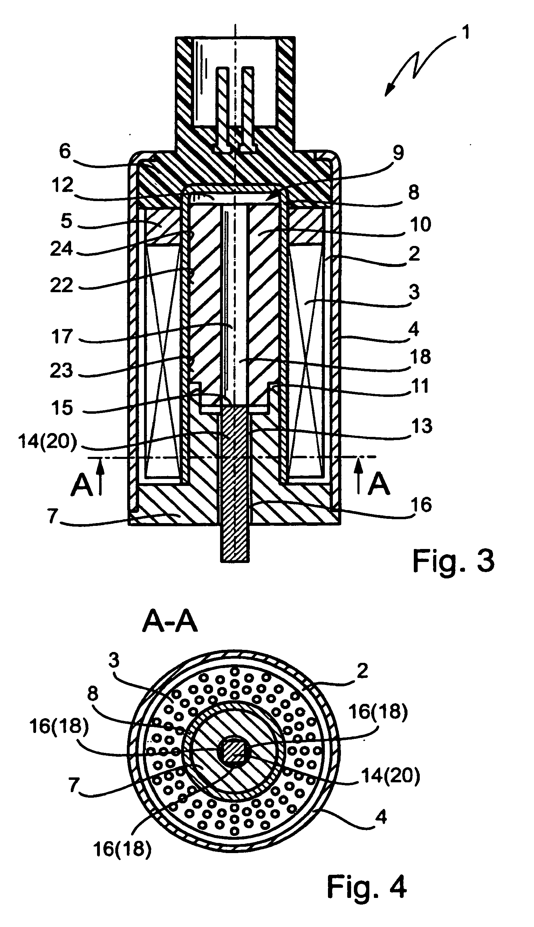

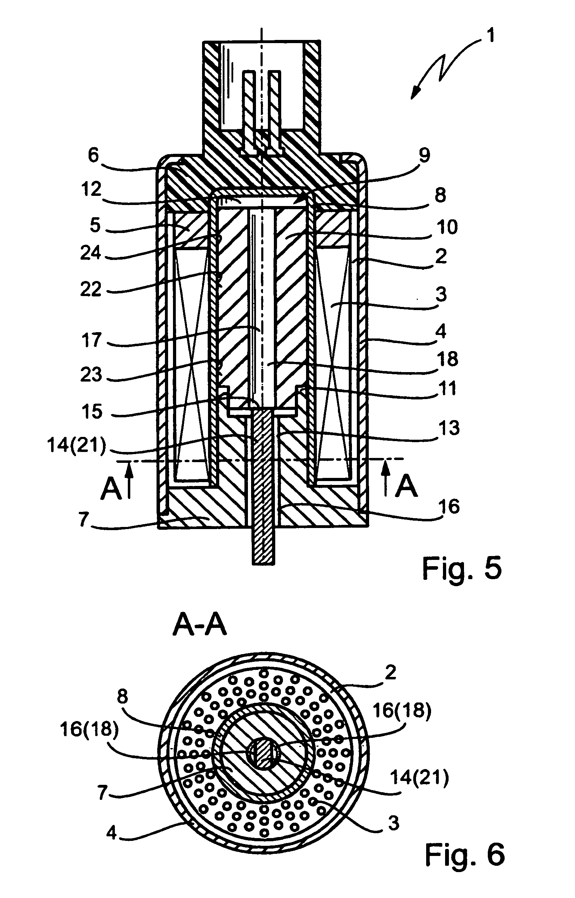

Weiterhin wird in den Figuren 1, 3 und 5 gezeigt, dass die in der Axialbohrung 13 im unteren Polschuh 7 geführte Stößelstange 14 erfindungsgemäß als vom Magnetanker 10 getrennte, lose Profilstange ausgebildet ist, die, wie in den Figuren 2, 4 und 6 erkennbar ist, in ihrer Querschnittsform von der Querschnittsform der Axialbohrung 13 abweicht und in ihrer Querschnittsfläche kleiner als die Querschnittsfläche der Axialbohrung 13 ist. Als vorteilhafte Ausführungsform ist die Stößelstange 14 dabei entweder, wie in Figur 2 dargestellt, als an den Profilkanten abgerundetes Dreikantprofil 19 oder, wie in Figur 4 dargestellt, als ebenfalls an den Profilkanten abgerundetes Vierkantprofil 20 oder auch, wie in Figur 6 zu sehen ist, als zweiseitig parallel abgeflachtes Rundprofil 21 aus einer Messinglegierung ausgebildet, welches spanlos durch Strangpressen herstellbar und durch Stanzschneiden ablängbar ist. Die durch diese Profile entstehenden freien Querschnittsräume innerhalb der Axialbohrung 13 im unteren Polschuh 7 bilden dann die oben zuletzt erwähnten Druckausgleichskanäle 16, über die der Innenraum des Ventilgehäuses des hydraulischen Ventils mit der ersten Kammer 11 im Ankerraum 9 des Elektromagneten 1 verbunden ist.

Des weiteren ist den Figuren 1, 3 und 5 entnehmbar, dass der Magnetanker 10 trotz der stirnseitig lose anliegenden Stößelstange 14 erfindungsgemäß eine zentrische Längsbohrung 17 aufweist, die, wie in den Figuren 2, 4 und 6 angedeutet ist, in ihrem Durchmesser kleiner als die größte Profilweite der Stößelstange 14 und größer als die kleinste Profilweite der Stößelstange 14 ausgebildet ist. Dadurch überdeckt die Stirnseite 15 der Stößelstange 14 die Öffnung der Längsbohrung 13 im Magnetanker 10 nur teilweise, so dass die Längsbohrung 13 im Magnetanker 10 über die freien Querschnittsflächen ihrer Öffnung den oben zuerst erwähnten Druckausgleichskanal 18 bildet, über den die erste Kammer 11 mit der zweiten Kammer 12 im Ankerraum 9 des Elektromagneten 1 verbunden ist. Sowohl diese von der Stirnseite 15 der Stößelstange 14 nicht überdeckten Querschnittsflächen der Längsbohrung 17 im Magnetanker 10 als auch die zuvor beschriebenen Querschnittsflächen der Druckausgleichskanäle im unteren Polschuh 7 weisen dabei jeweils einen Gesamtströmungsquerschnitt von mindestens 0,5 mm² auf, da das vom Elektromagneten 1 betätigte hydraulische Ventil zur Steuerung einer hydraulischen Vorrichtung zur Nokkenwellenverstellung vorgesehen ist und innerhalb des Hydrauliksystems dieser Vorrichtung ein statischer Betriebsdruck von bis zu 10 bar anliegt.

Schließlich geht aus den Figuren 1, 3 und 5 noch hervor, dass das nicht magnetisierbare Metallrohr 8 im Hohlzylinder des Spulenkörpers 2 als einseitig geschlossenes, becherförmiges Kupferrohr ausgebildet ist, welches die Spulenwicklung 3 gegen das Arbeitsfluid des hydraulischen Ventils abdichtet und dessen Innenseite 22 zugleich als Führung für den Magnetanker 10 ausgebildet ist. Zur Definition seiner Lagerstellen 23, 24 an der Innenseite 22 des Kupferrohres 8 ist der Magnetanker 10 dabei am oberen und am unteren Ende durch Centerlessschleifen bearbeitet und zwischen den Lagerstellen 23, 24 minimal durchmesserreduziert ausgebildet. Zusätzlich sind die Lagerstellen 23, 24 mit einer nicht näher dargestellten reibungsarmen bzw. verschließmindernden PTFE-Beschichtung ausgebildet, die zur Verringerung der Hysterese des Magnetankers sowie zur Erhöhung der Lebensdauer des Elektromagneten 1 beiträgt.

### Bezugszahlenliste

- 1: Elektromagnet
- 2: Spulenkörper
- 3: Spulenwicklung
- 4: Magnetgehäuse
- 5: oberer Polschuh
- 6: elektrisches Anschlußteil
- 7: unterer Polschuh
- 8: Metallrohr
- 9: Ankerraum
- 10: Magnetanker
- 11: erste Kammer
- 12: zweite Kammer
- 13: Axialbohrung
- 14: Stößelstange
- 15: Stirnseite
- 16: Druckausgleichskanal
- 17: Längsbohrung
- 18: Druckausgleichskanal
- 19: Dreikantprofil
- 20: Vierkantprofil
- 21: Rundprofil
- 22: Innenseite von 8
- 23: Lagerstelle
- 24: Lagerstelle

## Patentansprüche

1. Elektromagnet, zur Betätigung eines hydraulischen Ventils, welches innerhalb eines Hydrauliksystems einer Vorrichtung zum Verändern der Steuerzeiten von Gaswechselventilen einer Brennkraftmaschine angeordnet ist, mit folgenden Merkmalen:
■ der Elektromagnet (1) weist einen hohlzylindrischen Spulenkörper (2) auf, der zumindest eine Spulenwicklung (3) trägt und am Außenumfang von einem Magnetgehäuse (4) umschlossen wird,
■ der Spulenkörper (2) wird von einem oberen Polschuh (5), auf dem ein elektrisches Anschlußteil (6) aufliegt, sowie von einem unteren Polschuh (7), der in den Hohlzylinder des Spulenkörpers (2) hineinragt, begrenzt,
■ im Hohlzylinder des Spulenkörpers (2) ist ein nichtmagnetisierbares Metallrohr (8) angeordnet, dessen Hohlraum als Ankerraum (9) für einen axial beweglichen zylindrischer Magnetanker (10) ausgebildet ist,
■ der Magnetanker (10) teilt den Ankerraum (9) in eine erste Kammer (11) und eine zweite Kammer (12), die über zumindest einen axialen Druckausgleichskanal (18) im Magnetanker (10) miteinander verbunden sind,
■ der Magnetanker (10) steht über eine durch eine Axialbohrung (13) im unteren Polschuh (7) hindurch geführte Stößelstange (14) mit einem Steuerkolben im Ventilgehäuse eines hydraulischen Ventils in Verbindung,
■ wobei die in der Axialbohrung (13) im unteren Polschuh (7) geführte Stößelstange (14) als vom Magnetanker (10) getrennte, lose Profilstange ausgebildet ist **dadurch gekennzeichnet, dass** deren Querschnittsform von der der Axialbohrung (13) abweicht und deren Querschnittsfläche kleiner als die der Axialbohrung (13) ist,
■der Innenraum des am Elektromagneten (1) befestigten Ventilgehäuses ist über einen weiteren Druckausgleichskanal (16) im unteren Polschuh (7) mit der ersten Kammer (11) des Ankerraumes (9) verbunden,
■ so dass die freien Querschnittsräume innerhalb der Axialbohrung (13) im unteren Polschuh (7) zugleich als den weiteren Druckausgleichskanal bildenden Druckausgleichskanäle (16) zwischen dem Innenraum des Ventilgehäuses des hydraulischen Ventils und der ersten Kammer (11) im Ankerraum (9) des Elektromagneten (1) nutzbar sind,
■ wobei der stirnseitig an der Stößelstange (14) anliegende Magnetanker (10) eine zentrische Längsbohrung (17) aufweist, deren Durchmesser kleiner als die größte Profilweite der Stößelstange (14) und größer als die kleinste Profilweite der Stößelstange (14) ausgebildet ist,
■ so dass die Stirnseite (15) der Stößelstange (14) die Längsbohrung (17) im Magnetanker (10) nur teilweise überdeckt und diese somit als Druckausgleichskanal (18) zwischen der ersten Kammer (11) und der zweiten Kammer (12) im Ankerraum (9) des Elektromagneten (1) nutzbar ist.

2. Elektromagnet nach Anspruch 1, **dadurch gekennzeichnet, dass**
■ die Stößelstange (14) als an den Profilkanten abgerundetes Mehrkantprofil (19, 20) oder als ein- oder mehrseitig abgeflachtes Rundprofil (21) aus einer Messinglegierung ausgebildet ist, welches spanlos durch Strangpressen herstellbar und durch Stanzschneiden ablängbar ist.

3. Elektromagnet nach Anspruch 1, **dadurch gekennzeichnet, dass**
sowohl die Querschnittsflächen der Druckausgleichskanäle (16) im unteren Polschuh (7) als auch die von der Stirnseite (15) der Stößelstange (14) nicht überdeckten Querschnittsflächen der Längsbohrung (17) im Magnetanker (10) jeweils einen Gesamtströmungsquerschnitt von mindestens 0,5 mm² bei einem statischen Betriebsdruck von bis zu 10 bar aufweisen.

4. Elektromagnet nach Anspruch 1, **dadurch gekennzeichnet, dass**
■ das nichtmagnetisierbare Metallrohr (8) im Hohlzylinder des Spulenkörpers (2) als einseitig geschlossenes, becherförmiges Kupferrohr ausgebildet ist, welches die Spulenwicklung (3) gegen das Arbeitsfluid des hydraulischen Ventils abdichtet und dessen Innenseite (22) zugleich als Führung für den Magnetanker (10) ausgebildet ist.

5. Elektromagnet nach Anspruch 4, **dadurch gekennzeichnet, dass**
der Magnetanker (10) und/oder die Innenseite (22) des nichtmagnetisierbaren Metallrohrs (8) zur Verringerung der Hysterese des Magnetankers (10) sowie zur Erhöhung der Lebensdauer des Elektromagneten (1) eine reibungsarme bzw. verschleißmindernde Beschichtung, beispielsweise eine PTFE-Beschichtung, aufweisen.

6. Elektromagnet nach Anspruch 4 oder 5, **dadurch gekennzeichnet, dass**
■ der Magnetanker (10) zur Definition seiner Lagerstellen (23, 24) an der Innenseite (22) des nichtmagnetisierbaren Metallrohres (8) am oberen und am unteren Ende durch Centerlessschleifen bearbeitet ist, wobei der Durchmesser des Magnetankers (10) zwischen den Lagerstellen (23, 24) minimal reduziert ist.

## Claims

1. Electromagnet for actuating a hydraulic valve which is arranged within a hydraulic system of a device for varying the control times of gas exchange valves of an internal combustion engine, with the following features:
■ the electromagnet (1) has a hollow-cylindrical coil former (2) which carries at least one coil winding (3) and which is surrounded on the outer circumference by a magnet housing (4),
■ the coil former (2) is delimited by an upper pole piece (5), on which an electrical connection part (6) lies, and by a lower pole piece (7) which projects into the hollow cylinder of the coil former (2),
■ in the hollow cylinder of the coil former (2), a non-magnetizable metal tube (8) is arranged, the cavity of which is designed as an armature space (9) for an axially movable cylindrical magnet armature (10),
■ the magnet armature (10) divides the armature space (9) into a first chamber (11) and a second chamber (12) which are connected to one another via at least one axial pressure-compensating duct (18) in the magnet armature (10),
■ the magnet armature (10) is connected to a control piston in the valve housing of a hydraulic valve via a tappet rod (14) led through an axial bore (13) in the lower pole piece (7),
■ the tappet rod (14) guided in the axial bore (13) in the lower pole piece (7) being designed as a loose profile rod separate from the magnet armature (10),
**characterized in that**
the cross-sectional shape of which profile rod deviates from that of the axial bore (13) and its cross-sectional area is smaller than that of the axial bore (13),
■ the inner space of the valve housing fastened to the electromagnet (1) is connected to the first chamber (11) of the armature space (9) via a further pressure-compensating duct (16) in the lower pole piece (7),
■ so that the free cross-sectional spaces within the axial bore (13) of the lower pole piece (7) can be utilized at the same time as pressure-compensating ducts (16), forming the further pressure-compensating duct, between the inner space of the valve housing of the hydraulic valve and the first chamber (11) in the armature space (9) of the electromagnet (1),
■ the magnet armature (10), which bears against the tappet rod (14) on the end face, having a centric longitudinal bore (17), the diameter of which is designed to be smaller than the largest profile width of the tappet rod (14) and larger than the smallest profile width of the tappet rod (14),
■ so that the end face (15) of the tappet rod (14) only partially covers the longitudinal bore (17) in the magnet armature (10), and the said longitudinal bore can thus be utilized as a pressure-compensating duct (18) between the first chamber (11) and the second chamber (12) in the armature space (9) of the electromagnet (1).

2. Electromagnet according to Claim 1, **characterized in that**
■ the tappet rod (14) is designed as a polygonal profile (19, 20) rounded at the profile edges or as a unilaterally or multilaterally flattened round profile (21), the said profile consisting of a glass alloy and incapable of being produced in a non-cutting way by extrusion and of being cut to length by means of pinch-cutting.

3. Electromagnet according to Claim 1, **characterized in that**
■ poles from the cross-sectional areas of the pressure-compensating ducts (16) in the lower pole piece (7) and the Cross-sectional areas, not covered by the end face (15) of the tappet rod (14), of the longitudinal bore (17) in the magnet armature (10) have in each case a total flow cross section of at least 0.5 mm² at a static operating pressure of up to 10 bar.

4. Electromagnet according to Claim 1, **characterized in that**
■ the non-magnetizable metal tube (8) in the hollow cylinder of the coil former (2) is designed as a unilaterally closed cup-shaped copper tube which seals off the coil winding (3) with respect to the working fluid of the hydraulic valve and the inside (22) of which is designed at the same time as a guide for the magnet armature (10).

5. Electromagnet according to Claim 4, **characterized in that**
■ the magnet armature (10) and/or the inside (22) of the non-magnetizable metal tube (8) have/has a low-friction or wear-reducing coating, for example a PTFE coating, in order to reduce the hysteresis of the magnet armature (10) and in order to increase the service life of the electromagnet (1).

6. Electromagnet according to Claim 4 or 5, **characterized in that**
■ the magnet armature (10) is machined by centreless grinding at the upper and in the lower end in order to define its bearing points (23, 24) on the inside (22) of the non-magnetizable metal tube (8), the diameter of the magnet armature (10) being reduced minimally between the bearing points (23, 24).

## Revendications

1. Electroaimant destiné à actionner une soupape hydraulique disposée à l'intérieur d'un système hydraulique d'un dispositif qui modifie les durées de commande de soupapes de renouvellement de gaz d'un moteur à combustion interne, et présentant les caractéristiques suivantes :
l'électroaimant (1) présente un corps de bobine cylindrique creux (2) qui porte au moins un enroulement de bobine (3) et dont la périphérie est entourée par un boîtier magnétique (4),
le corps de bobine (2) est délimité par un sabot polaire supérieur (5) sur lequel repose une pièce (6) de raccordement électrique ainsi que par un sabot polaire inférieur (7) qui pénètre dans le cylindre creux du corps de bobine (2),
un tube métallique non magnétisable (8) dont la cavité est configurée comme espace (9) pour un induit magnétique cylindrique (10) mobile axialement est disposé dans le cylindre creux du corps de bobine (2),
l'induit magnétique (10) divise l'espace d'induit (9) en une première chambre (11) et une deuxième chambre (12) reliées l'une à l'autre par au moins un canal axial (18) d'équilibrage de pression prévu dans l'induit magnétique (10),
l'induit magnétique (10) est relié à un piston pilote prévu dans le boîtier d'une soupape hydraulique par une tige de poussoir (14) guidée dans un alésage axial (13) qui traverse le sabot polaire inférieur (7),
la tige de poussoir (14) guidée par l'alésage axial (13) dans le sabot polaire inférieur (7) étant configurée comme tige profilée libre séparée de l'induit magnétique (10),
**caractérisé en ce que**
la forme de la section transversale de la tige profilée libre est différente de celle de l'alésage axial (13) et la superficie de sa section transversale est inférieure à celle de l'alésage axial (13),
**en ce que** l'espace intérieur du boiter de soupape fixé sur l'électroaimant (1) est relié à la première chambre (11) de l'espace d'induit (9) par un autre canal d'équilibrage de pression (16) prévu dans le sabot polaire inférieur (7),
de telle sorte que les espaces libres de la section transversale de l'alésage axial (13) peuvent être utilisées dans le sabot polaire inférieur (7) en même temps que les canaux (16) d'équilibrage de pression qui forment l'autre canal d'équilibrage de pression prévu entre l'espace intérieur du boîtier de la soupape hydraulique et la première chambre (11) de l'espace d'induit (9) de l'électroaimant (1),
**en ce que** l'induit magnétique (10) qui repose frontalement sur la tige de poussoir (14) présente un alésage longitudinal central (17) dont le diamètre est plus petit que la plus grande largeur du profil de la tige de poussoir (14) et qui est plus grand que la plus petite largeur du profil de la tige de poussoir (14),
de telle sorte que le côté frontal (15) de la tige de poussoir (14) ne recouvre qu'une partie de l'alésage longitudinal (17) ménagé dans l'induit magnétique (10) et que cet alésage longitudinal peut être utilisé comme canal (18) d'équilibrage de pression entre la première chambre (11) et la deuxième chambre (12) de l'espace d'induit (9) de l'électroaimant (1).

2. Electroaimant selon la revendication 1, **caractérisé en ce que** la tige de poussoir (14) est configurée comme profilé polygonal (19, 20) à arêtes arrondies ou comme profilé circulaire (21) aplati sur un ou plusieurs côtés, en alliage de laiton, qui peut être fabriqué sans décolletage par extrusion et être découpé à longueur par estampage.

3. Electroaimant selon la revendication 1, **caractérisé en ce que** tant la superficie de la section transversale des canaux (16) d'équilibrage de pression du sabot polaire inférieur (7) que la superficie des sections transversales de l'alésage longitudinal (17) de l'induit magnétique (10) qui ne sont pas recouvertes par le côté frontal (15) de la tige de poussoir (14) présentent une section transversale totale d'écoulement d'au moins 0,5 mm² sous une pression statique de service de jusque 10 bars.

4. Electroaimant selon la revendication 1, **caractérisé en ce que** le tube métallique non magnétisable (8) prévu dans le cylindre creux du corps de bobine (2) est configuré comme tube en cuivre en forme de godet fermé d'un côté, qui assure l'étanchéité de l'enroulement de bobine (3) vis-à-vis du fluide de travail de la soupape hydraulique et dont le côté intérieur (22) est également configuré comme guide pour l'induit magnétique (10).

5. Electroaimant selon la revendication 4, **caractérisé en ce que** l'induit magnétique (10) et/ou le côté intérieur (22) du tube métallique non magnétisable (8) présentent un revêtement à bas frottement ou diminuant l'usure, par exemple un revêtement en PTFE, pour diminuer l'hystérèse de l'induit magnétique (10) et pour augmenter la durée de vie de l'électroaimant (1).

6. Electroaimant selon les revendications 4 ou 5, **caractérisé en ce que** l'extrémité supérieure et l'extrémité inférieure de l'induit magnétique (10) sont usinées par meulage non centré en vue de définir ses emplacements de palier (23, 24) sur le côté intérieur (22) du tube métallique non magnétisable (8), le diamètre de l'induit magnétique (10) étant réduit minimalement entre les emplacements de palier (23, 24).
